Europäisches Patentamt

European Patent Office

Office européen des brevets

(19)

(11) **EP 1 563 758 A2**

(12) **EUROPÄISCHE PATENTANMELDUNG**

(43) Veröffentlichungstag:
**17.08.2005 Patentblatt 2005/33**

(51) Int Cl.⁷: **A45D 34/04**, A45D 40/26,
A46B 9/02

(21) Anmeldenummer: 05103920.4

(22) Anmeldetag: **16.07.2003**

(84) Benannte Vertragsstaaten:
**AT BE BG CH CY CZ DE DK EE ES FI FR GB GR
HU IE IT LI LU MC NL PT RO SE SI SK TR**

(30) Priorität: **23.07.2002 DE 10233341**

(62) Dokumentnummer(n) der früheren Anmeldung(en)
nach Art. 76 EPÜ:
**03016116.0 / 1 384 417**

(71) Anmelder: **Beiersdorf AG
20253 Hamburg (DE)**

(72) Erfinder: **Eckers, Lorenz
21255, Tostedt (DE)**

Bemerkungen:
Diese Anmeldung ist am 11 - 05 - 2005 als
Teilanmeldung zu der unter INID-Kode 62
erwähnten Anmeldung eingereicht worden.

(54) **Sichelförmiger Applikator für flüssige oder pastöse Medien**

(57)     Ein Applikator für flüssige oder pastöse Medien, insbesondere für dekorative Kosmetika wie Mascara, besitzt einen sichelförmigen, aussteifenden Kern aus einem ersten Kunststoff-Material, der zumindest im Bereich seines vorderen Endes von einer Trägerhülse aus einem zweiten Kunststoff-Material umgeben ist. Die Trägerhülse besitzt eine Vielzahl von radial nach außen auskragenden Fingern, die einstückig an die Trägerhülse angeformt sind und ebenfalls aus dem zweiten Kunststoff-Material bestehen. Mehrere über den Umfang der Trägerhülse verteilte Finger bilden einen Fingerkranz und in Längsrichtung der Trägerhülse sind eine Vielzahl von Fingerkränzen mit gleicher Fingeranzahl hintereinander angeordnet.

Fig. 1

EP 1 563 758 A2

**Beschreibung**

Die Erfindung betrifft einen sichelförmigen Applikator für flüssige oder pastöse Medien, insbesondere für dekorative Kosmetika wie Mascara, mit einem sichelförmigen, aussteifenden Kern aus einem ersten Kunststoff-Material, der zumindest im Bereich seines vorderen Endes von einer Trägerhülse aus einem zweiten Kunststoff-Material umgeben ist, die eine Vielzahl von radial nach außen auskragenden Fingern aufweist, die einstückig an die Trägerhülse angeformt sind und aus dem zweiten Kunststoff-Material bestehen, wobei mehrere über den Umfang der Trägerhülse verteilte Finger einen Fingerkranz bilden und wobei in Längsrichtung der Trägerhülse eine Vielzahl N von Fingerkränzen mit gleicher Fingeranzahln hintereinander angeordnet sind.

Ein entsprechender Applikator ist in verschiedenen Anwendungsbereichen einsetzbar. Im folgenden soll beispielhaft von der Applikation von Wimperntusche, der so genannten Mascara, ausge-gangen werden, jedoch ist der erfindungsgemäße Applikator in gleichartiger Weise unter anderem auch für das Färben von Haarsträhnen oder für das Auftragen von Pharmazeutika zu verwenden.

Ein Applikator für Mascara sollte sicherstellen, dass die Mascara in einfacher Weise gleichmäßig aufzutragen ist. Zu diesem Zweck muss der Applikator die Voraussetzung erfüllen, dass die Wimpern vor dem Auftragen der Mascara zunächst gekämmt und somit in gewünschter Weise ausge-richtet werden. Darüber hinaus soll der Applikator soviel Mascara aufnehmen können, dass sämtliche Wimpern mit dem Applikator gefärbt werden können, ohne diesen mehrfach in den Mascara - Vorratsbehälter eintauchen zumüssen. Damit der Auftrag der Mascara gleichmäßig und klecksfrei erfolgt, muss sichergestellt sein, dass nicht übermäßig viel Mascara an dem Applikator anhaftet, weshalb dieser üblicherweise beim Herausziehen aus dem Mascara -Vorratsbehälter abgestreift wird. Da der Applikator als frei auskragendes Bauteil mit einem endseitigen Handgriff ausgebildet ist, muss er eine ausreichende Stabilität besitzen, um die bei Benutzung einwirkenden Kräfte si-cher aufnehmen zu können, ohne dass die Gefahr eines Abbrechens besteht. Andererseits muss der Applikator je doch so flexibel sein, dasser sich an die Krümmung der Augenlider anpassen lässt und bei fehlerhafter Anwendung aus reichend nachgiebig ist, um Verletzungen des Benut-zers im Augenbereich zu vermeiden.

Bisher war es üblich (US 4, 982,838), einen Mascara -Applikator aus mehreren Drähten herzuste l-len, zwischendenen eine Vielzahl von kurzen Bors ten angeordnet werden. Nach Verdrillen der Drähte sind die Borsten fest zwischen den Drähten gehalten. Ein wesentlicher Nachteil einer de r-artigen gedrehten Applikatorbürste besteht darin, dass aufgrund der kompakten Anordnung der Borsten ein nicht unerheblicher Anteil der Mascara bei Benutzung in den zwischen den Borsten gebildeten Stauräumen zurückgehalten wird, in denen sich Verunreinigungen, beispiels weise Sporen oder Bakterien ent wickeln können. Darüber hinaus ist mit einer derartigen Applikato r-bürste aufgrund der Vielzahl von dichtgepackten Borsten ein gleichmäßiges Kämmen der Wi m-pern nicht zu erzielen, da die Borsten mit den Wimpern nicht in kammartigen Eingriff treten kö n-nen. Eine gedrehte Applik atorbürste ist des Weiteren relativ teuer in der Herstellung, da die Drä h-te und die Borsten einzeln erzeugt und die Borsten anschließend auf konstruktiv aufwen digen Anlagen in die Drähte ein gedreht werden müssen. Dabei müssen die Borstenen de n zusätzlich entgratet und geschliffen werden, um scharfkantige Enden und eine damit verb undene Verletzungsgefahr zuvermeiden. Des Weiteren besteht bei gedrehten Applikatorbürsten ein zusätzl i-cher Nachteil darin, dass die aus den verdrillten Metalldrähten gebildete Metallseele bei Gebrauch abknicken kann, wase inerseits zur Unbrauchbarkeit der Appli katorbürste führt und andererseits eine hohe Gefährdung der Augenpartie des Anwenders mit sich bringt.

Neben den rotationssymmetrischen (linearen) Mascarabürsten sind auch sichelförmig geb ogene Mascarabürsten bekannt. Diese im Normalfall werden durch Verbiegen der linearen Mascar a-bürsten hergestellt. Da die Borsten senkrecht zur inneren Drahtseele angeordnet sind, stehen die Borsten auf der äußeren Seite weiter auseinander und auf der inneren Seite enger zueinander.

Diese ungleichmäßige Borstendichte führt zu einer mangelhaften Applikatorleistung, da sich das Auftrags und Durchkämmungsverhalten - durch die unterschiedlichen Borstenabstände an Innen - und Außenkurve der Bürste - stark unterscheidet

Um die Nachteile von gedrehten Applikatorbürsten mit Bor stenbesatz zu vermeiden, ist gemäß der WO 00/54623 ein Applikator entwickelt worden, von dem im Oberbegriff des An spruchs 1 ausgegangen wird. Ein derartiger Applikator besitzt einen sichelförmigen, aussteifenden Kern, auf den ein elastomerer Kunststoffmantel in Form einer Trägerhülse mit radial nach außen vorstehe n-den, einstückig angeformten Fin gern aufgespritzt ist, wobei die Finger einen sich zu ihrem freien Ende hin verjüngenden Querschnitt aufweisen. Durch diese Au sgestaltung ist erreicht, dass die Finger an ihren freien Enden einen größeren gegenseitigen Abstand als in ihren unteren Fußb e-reichen besitzen, in denen sie mit der Trägerhülse verbunden sind. Der relativ große Abstand der freien Trägerenden bewirkt, dass im Bereich der Spitzen der Finger keine oder nur eine geringe Menge Mascara aufgenommen wird, die sich mit einem üblicherweise vorhandenen Ab streifer fast vollständig entfernen lässt. Somit ist der Spitzenbereich der Finger bei Gebrauch des Applikators im wesentlichen mascarafrei und führt eine reine Kämmwirkung aus. Dies hat zur Folge, dass die Wimpern gekämmt werden, bevor sie mit der im Fußbereich der Finger aufgenommenen Mascara in Kontakt kommen. Darüber hinaus ermöglicht es der relativ geringe Abstand zwischen benac h-barten Fingern in deren Fußbereich, eine ausreichend große Menge an Mascara aufzunehmen, so dass das mehrmalige Eintauchen des Applikators in den Vorratsbehälter üblicherweise nicht notwendig ist. Es hat sich jedoch gezeigt, dass die Kämmwirkung und der Mascaraauftrag von der konstruktiven Ausgestaltung des Applikators und insbesondere der Anzahl, Ausgestaltung und Anordnung der Finger abhängig ist und dass sich nicht mit jedem Applikator der genannten Art zufrieden stellende Ergebnisse erzielen lassen.

Der Erfindung liegt die Aufgabe zugrunde, einen gattungsgemäßen Applikator derart weiterzubi lden, dass sowohl eine verbesserte Kämmwirkung als auch eine gute und gleichmäßige Aufbri n-gung des aufzutragenden Mediums gewährleistet ist.

Diese Aufgabe wird erfindungsgemäß bei einem Applikator der eingangs genannten Art durch die im kennzeichnenden Teil des Anspruchs 1 aufgeführte Parameter -Kombination gelöst.

Alle Fingerkränze sollten die gleiche Anzahl von Fingern aufweisen, die vorzugsweise über den Umfang der Trägerhülse gleichverteilt sind, d. h. einen gleichen gegenseitigen Winkelabstand besitzen. Die Anzahln der Finger pro Finger kranz liegt bei dem erfindungsgemäßen Applikator zwischen 8 und 16, wobei insbesondere eine gerade Anzahln der Finger (8, 10, 12 oder 16 Fi n-ger) vorgesehen sein sollte.

Während die Anzahln der Finger pro Fingerkranz die Anord nungsdichte der Finger in Umfang s-richtung bestimmt, ist die Anordnungsdichte der Fin ger in Längsrichtung der Träger hülse und somit des Applikators durch die Anzahl $N$ der in Axialrichtung hintereinander liegenden Fingerkränze bestimmt. Der Abstand zwischen benachbarten Fingerkränzen sollte innerhalb eines vorbestim m-ten Bereiches liegen und darüber hinaus sollten auch nicht zu viele Fingerkränze vorgesehen sein, um die Handhabung des Applikators nicht zuerschweren und um auch bei relativ kleinen Wimpern noch einen guten Mascaraauftrag zuerreichen. Erfindungsgemäß ist deshalb vorges e-hen, dass der Applikator zwischen 14 und 30 Fingerkränze und insbesondere zwischen 20 und 27 Fingerkränze aufweist.

Die Finger aller Fingerkränze können mit gleichen Abmessungen ausgestaltet sein. Es hat sich jedoch als vorteilhaft erwiesen, sowohl am vorderen als auch am hinteren Ende des Applikators Fingerkränze mit Fingern verringerter Abmessun gen auszubilden. Diese Finge rkränze kleinerer Finger werden zwar bei der Anzahl $N$ der Fingerkränze mitgezählt, jedoch beziehen sich die fo lgenden Ausführungen auf die Finger eines im mittleren Bereich liegenden normalen Fingerkran-zes. Dabei ist vorgesehen, dass die Länge $I$ der Finger, d. h. das Maß, um das der Finger in radi a-ler Richtung von der Träger hülse hervorsteht, im Bereich von 1,5 mm bis 3,0 mm liegt.

Auch der gegenseitige Abstand $s_1$ benachbarter Fingerkränze ist ein Maß, dass die Kämmwirkung und den Mascaraauftrag wesentlich beeinflusst. Der Abstand $s_1$, der zwischen den freien Enden gleichartiger Finger benachbarter Fingerkränze gemessen wird, sollte erfindungsgemäß im Bereich von 0,6 mm bis 1,5 mm liegen.

Im Bereich der Füße der Finger, d.h. im Anschlussbereich der Finger an die Trägerhülse, sollten die Finger benachbarter Fingerkränze einen lichten Abstand $s_2$ in der Größenordnung von 0,2 mm bis 0,5 mm aufweisen.

In einem ersten Ausführungsbeispiel der Erfindung ist vorgesehen, dass der Applikator fo lgende Parameter-Kombination besitzt:

I. $n = 10$
II. $N = 27$
III. $I = 2,4$ mm
IV. $s_1 = 0,95$ mm
V. $s_2 = 0,25$ mm
VI. $r_K = 25$ mm

In einer weiteren möglichen Ausgestaltung ist vorgesehen, dass die Parameter in Kombination folgende Werte annehmen:

I. $n = 12$
II. $N = 22$
III. $I = 2,4$ mm
IV. $s_1 = 1,2$ mm
V. $s_2 = 0,42$ mm
VI. $r_K = 15$ mm

Der Applikator weist eineim wesentlichen kreiszylinderförmige Konfiguration auf, d. h. eine Hül l-fläche des Applikators besitzt einen Kreisquerschnitt, der entweder über die gesamte Länge des Fingerfeldes konstant ist oder lediglich in dessen Endbereichen in genannter Weise verringert ist. Für die praktische Handhabung des Applikators hat es sich als sinnvoll erwiesen, wenn dieser einen Außendurchmesser $D$ im Bereich von 6,0 mm bis 10,0 mm und insbesondere von 8,0 mm aufweist.

Der aussteifende, sichelförmige Kern besitzt vorzugsweise einen Kreisquerschnitt, dessen Durc h-messer im Bereich von 1,5 mm bis 2,5 mm liegt und insb esondere 2,0 mm beträgt. Der Kern kann über seine gesamte Länge einen gleich bleibenden Querschnitt aufweisen, vorzugsweise ist j e-doch vorgesehen, dass der Kern sich an seinem vorderen Ende verjüngt.

Die stetige gleichsinnige Krümmung des Kerns hat bevorzugt einen Radius $r_K$ von 12 mm bis 50 mm, der sich am typischen Radius des menschlichen Augenlides orientiert.

Im Sinne der Erfindung ist auch eine nicht gleichsinnige Krümmung des Kerns, z. B. in Form eines Elipsenausschnittes.

Die Wandstärke a der Träger hülse bestimmt wesentlich die elastische Lagerung der Finger und somit deren Verformbarkeit. In dem Bereich, in dem der Kern einen konstanten Querschnitt au f-weist, sollte die radiale Wandstärke a der Trägerhülse im Bereich von 0 ,3 mm bis 1,0 mm liegen und insbesondere 0,6 mm betragen. Wenn sich der Kern an seinem vor deren Ende verjüngt, wird die Wandstärke a der Trägerhülse in diesem Bereich entsprechend vergrößert, so dass die Außenkontur der Trägerhülse kreiszylinderförmig ist.

Der Applikator wird vorzugsweise im Zwei-Komponenten-Verfahren hergestellt. In einem ersten Schritt wird der sichel förmige Kern aus dem ersten Kunststoff -Material gespritzt, wo raufhin dann in einem zweiten Schritt ein elastomeres zweites Kunststoff -Material zur Bildung der Trägerhülse und der Finger auf den Kern aufgespritzt wird.

Das Zusammensetzen der Bürste, durch einschieben eines sichelförmigen Kerns in eine vorgefe r-tigte Trägerhülse, ist jedoch auch möglich.

Die gesamte axiale Länge L der Trägerhülse sollte im Be reich von 20,0 mm bis 35,0 mm liegen und insbesondere 25,0 mm betragen.

Erfindungsgemäß kann vorgesehen sein, den vorderen Bereich des Applikators mit erhöhter Fl e-xibilität auszubilden. Dies kann dadurch erreicht werden, dass die Trägerhülse mit ihrem vorderen Endabschnitt um das Maß v über das vordere Ende des Kerns hinausragt, so dass der vordere Endabschnitt des Applikators vollständig aus dem elastomeren zweiten Kunst stoff-Material gebi ldet ist. Das Maß v kann im Bereich von 1,0 mm bis 8,0 mm liegen und beträgt vorzugsweise 3,0 mm.

In der einfachsten geometrischen Ausgestaltung liegen die Finger jedes Fingerkranzes mit ihren Mittelachsen in einer gemeinsamen, sich senkrecht zur Längsrichtung d es Applikators erstrecke n-den Ebene, so dass kein Versatzeinzelner Finger in Längsrichtung der Trägerhülse bzw. des A p-plikators vorgesehen ist. Alternativistes jedoch auch möglich, dass zumindest ein Finger eines Fingerkranzes gegenüber den anderen Fingern des Fingerkranzes um das Maß $v_F$ in Längsrichtung der Trägerhülse versetzt angeordnet ist. In bevor zugter Ausgestaltung der Erfindung ist d a-bei vorgesehen, dass jeder zweite Finger des Fingerkran zes versetzt angeordnet ist, so dass die Finger eines Fingerkranzes in zwei parallelen, in Längsrichtung der Trägerhülse beabstan deten, sich senkrecht zur Längsrichtung der Trägerhülse erstreckenden Ebenen liegen. Das Versatzmaß $v_F$ wird vorzugsweise als Vielfaches des Fußdurchmessers $d_F$ der Finger angegeben zu $v_F$ = f x $d_F$, wobei f ein Faktor im Bereich von 0 (kein Versatz) bis 1,5 ( maximaler Versatz) ist.

Neben einem Versatz einze lner Finger inner-halb eines Fin gerkranzes, können auch benachbarte Fingerkränze relativ zueinander in Umfangsrichtung um einen Winkel α versetzt angeordnet sein, wobei α zwischen 0° und 10° liegen sollte. Wenn α = 0° ist und somit kein Winkelversatz vorha n-den ist, liegen die Spitzen gleichartiger Finger der Fingerkränze auf einer in Längsrichtung des Applikators verlaufenden Geraden. Wenn zwischen benachbarten Fingerkränzen ein Winkelve r-satz vorhanden ist, sind die Spitzen gleichartiger Finger der Fin gerkränze auf einer umlaufenden Spirallinie angeordnet.

In bevorzugter Ausgestaltung der Erfindung ist vorgesehen, dass jeder Finger kegelförmig ausg e-bildet ist und einen Fußdurchmesser $d_F$ im Bereich von 0,4 mm bis 1,0 mm und ins besondere von 0,68 mm besitzt. Die Finger sind an ihrem freien Ende vorzugsweise abgerundet, wobei ein Rad i-us R der Abrundung im Bereich von 0,02 mm und 0,2 mm liegt und insbesondere 0,05 mm beträgt.

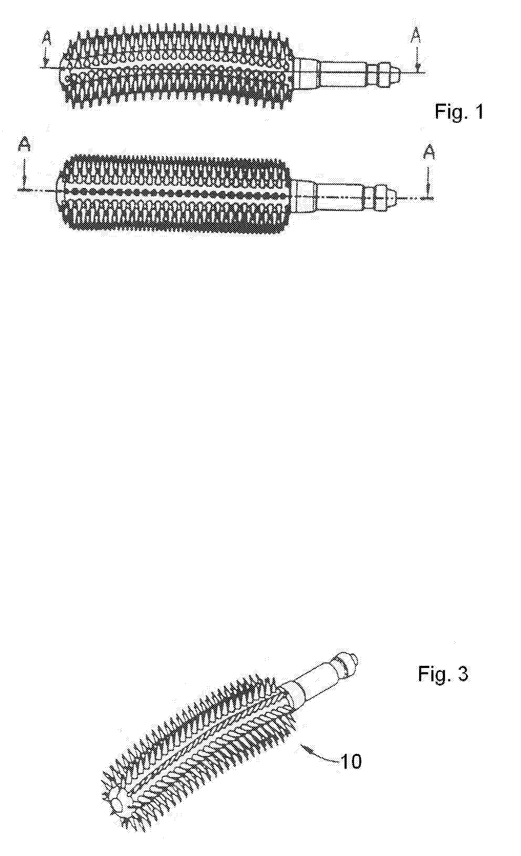

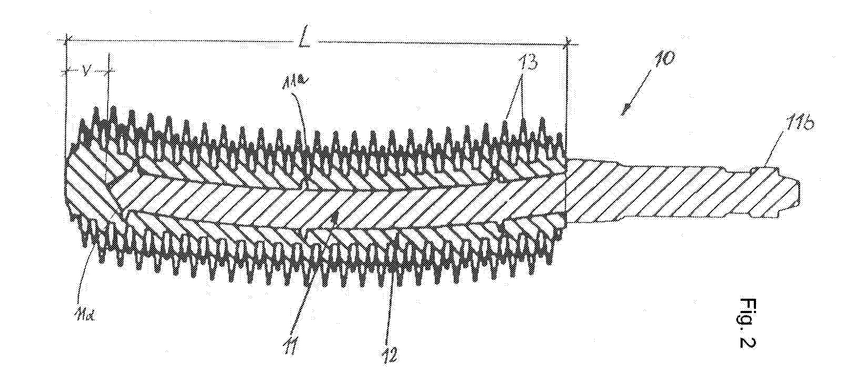

Werden die Finger senkrecht zur Krümmungstangente des Kerns angeordnet, so haben die scheibenförmigen Fingerkränzen an der Seite des kleineren Radius einen geringeren Abstand als an der Seite des größeren Radius. (s. Fig. 1).

Weitere Einzelheiten und Merkmale der Erfindung sind aus der folgenden Beschreibung von Au s-führungsbeispielen unter Bezugnahme auf die Zeichnung ersichtlich. Es zeigen:

Figur 1    die Seitenansichten eines Applikators mit Lotrecht zur Tangente - dem Radius folgend - (Achse A-A) angeordneten Borsten, gemäß einem grundsätzlichen Au fbau,

Figur 2    einen Längsschnitt durch den Applikator gemäß Fig. 8,

Figur 3    die perspektivische Darstellung des Applikators aus Fig. 8,

Figur 4    die Seitenansichten eines sichelförmig gebogenen Kerns, gemäß einem grun dsätzlichen Aufbau

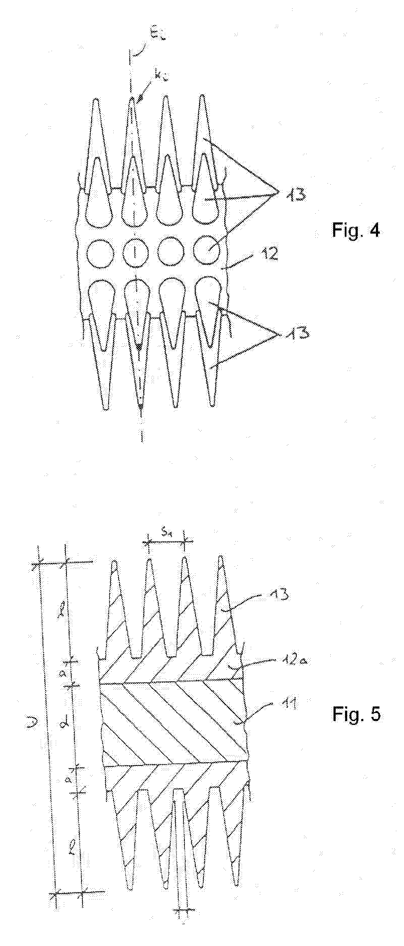

Die Fig. 1 bis 3 zeigen einen Applikator 10 grundsätzlichen Aufbaus anhand dessen in Ve rbindung mit den Fig. 4 bis 7 die einzelnen Parameter erläutert werden sollen.

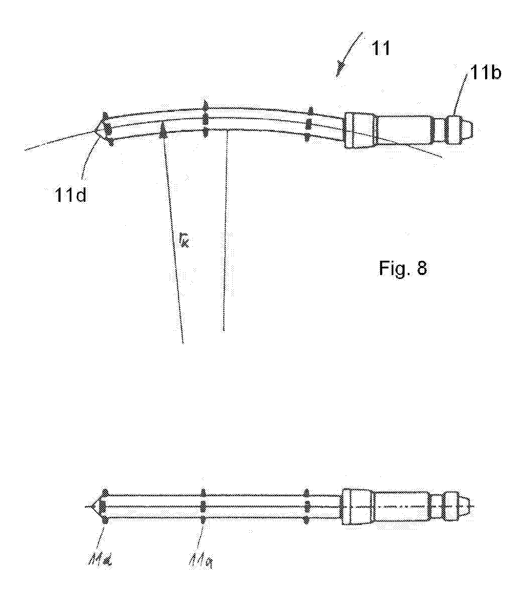

Der Applikator 10 besitzt einen sichelförmigen, aussteifenden Kern 11 (Fig. 8) mit einem Kreisquerschnitt, der an seinem hinteren Ende mit Verbindungselementen 11b zur Anbringung an einem nicht dargestellten Aufnahmeteil versehen ist. In seinem vorderen Endbereichträgt der Kern 11 einen verbreiterten Kopf 11d, der zusammen mit im mittleren Abschnitt des Kerns 11 ausgebi l-deten Ausnehmungen 11a der formschlüssigen Befestigung des Kerns 11 dient. Die stetige gleichsinnige Krümmung des Kerns hat bevorzugt einen Radius $r_K$ = 12 mm bis 50 mm, der sich am typischen Radius des menschlichen Augenlides orientiert. Der Kern 11 besteht aus einem ersten Kunststoff -Material und wird in der ersten Phase eines Zwei-Komponenten-Spritzgussrfahrens hergestellt.

Auf den sichelförmigen Kern 11 wird in einer zweiten Phase des Zwei -Komponenten-Spritzgussverfahrens eine Trägerhülse 12 (Fig. 2) aus einem elastomeren zweiten Kuns tstoff-Material aufge spritzt, die aufgrund des Eingriffs mit den Ausnehmungen 11a und dem Kopf 11d des Kerns 11 mit diesem fest verbunden ist. Die Außenkontur der Trägerhülse 12 ist kreiszylin drisch, so dass sie in einem mittleren und rückseitigen Abschnitt, in dem sie den einen konstanten Querschnitt aufweisenden Mittelbereich des Kerns 11 umgibt, eine konstante Wandstärke besitzt, während ihre Wandstärkein demjenigen Bereich, in dem sie den sich verjüngenden Bereich des Kerns 11 umgibt, ständig zunimmt und die Quer schnittsverminderung des Kerns 11 ausgleicht. Die Trägerhülse 12 ragt mit einem vorderen Endabschnitt 12b um das Maß v (siehe Fig. 2) über das vordere Ende des Kerns 11 hinaus, so dass der vordere Endabschnitt 12b voll ständig aus dem elastomeren zweiten Kunstst off-Material gebildet ist.

Auf der Außenseite der Trägerhülse 12 sind radial nach außen auskragende, sich zu ihrem freien Ende hin kegelförmig verjüngende Finger 13 einstückig angeformt, die ebenfalls aus dem elast o-meren zweiten Kunststoff -Material bestehen. Die Finger 13 sind in Form von insgesamt N Finge r-kränzen $K_1$, $K_2$, $K_3$, $K_4$,... $K_{26}$, $K_{27}$ angeordnet, die in Längsrichtung der Trägerhülse 12 mit gleichem Abstand hintereinander liegend angeordnet sind. Jeder Finge rkranz $K_i$ (siehe Fig. 4) umfasst eine gewisse Anzahln von Fingern 13, die jeweils in einer sich senkrecht zur Längsrichtung der Trägerhülse 12 erstreckenden Ebene $E_i$ liegen, von denen in Fig. 4 nur eine angedeutet ist, und unter gleichem Winkelabstand über den Umfang der Trägerhülse 12 gleich verteilt sind. Bei dem in den Fig. 1 bis 3 dargestellten Ausführungsbeispiel sind insgesamt N = 27 Fingerkränze vorgesehen, die alle n = 10 Finger 13 um fassen. Die Anordnung und Ausgestaltung der Finger 13 ist bei den meisten Fingerkränzen identisch, lediglich der am hinteren Ende ausgebildete erste Fingerkranz $K_1$ sowie die beiden letzt en, am vorderen Ende der Trägerhülse 12 ange ordneten Fingerkränze $K_{26}$ und $K_{27}$ weisen Finger verringerter Abmessungen auf, während die Fingerkränze $K_2$ bis $K_{25}$ eine identische Konfiguration besitzen. Angaben zu der Dimensionierung der Finger 13 beziehen sich immer auf die identisch ausgebildeten Fingerkränze.

Wie Fig. 2 zeigt, besitzt die Trägerhülse 12 eine Gesamt länge L, wobei der Kern 11 an se inem hinteren, die Verbindungselemente 11b aufweisenden Ende aus der Trägerhülse 12 herausragt.

Die Fig. 1 bis 3 zeigen ein konkretes Ausführungsbeispiel eines sichelförmigen Applikators, deren Borsten dem Radius folgend (senkrecht zur Tangente) angeordn et sind.

Wie Fig. 4 zeigt, können die Finger 13 eines beliebigen Fingerkranzes $K_i$ mit ihren Spitzen auf einer sich senkrecht zur Längsrichtung der Trägerhülse 12 erstreckenden Ebene $E_i$ liegen, wobei die Ebenen benachbarter Fingerkränze einen konstanten gegenseitigen Abstand aufweisen.

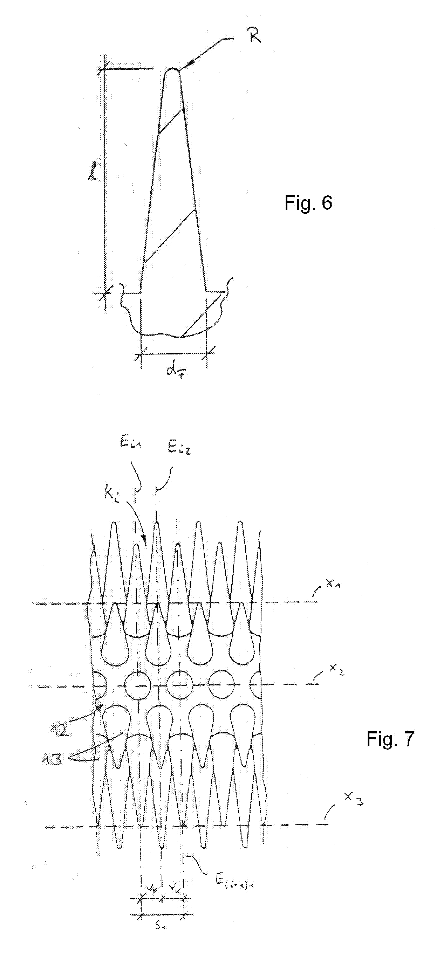

In Fig. 7 ist eine alternative Ausführung dargestellt, bei der in Umfangsrichtung gesehen jeder zweite Finger 13 des Finger kranzes $K_i$ in Längsrichtung der Trägerhülse 12 gegen über den and e-ren Fingern des Fingerkranzes versetzt angeordnet ist. Dies führt dazu, dass die Hälfte der Finger des Fingerkranzes $K_i$ mit ihren Spitzen in einer ersten, sich senkrecht zur Längs richtung der Trägerhülse 12 erstrecken den Ebene $E_{i1}$ und die andere Hälfte der Finger in einer dazu parallelen, um das Maß $v_F$ in Längsrichtung der Träger hülse 12 versetzten Ebene $E_{i2}$ angeordnet ist. Der Abstand der Ebenen $E_{i1}$ und $E_{i2}$, d.h. das Versatzmaß $v_F$ der Finger in Längsrichtung der Träge r-hülse 12 ist für alle Fingerkränze gleich. Darüber hinaus kann vorgesehen sein, dass die Ebene $E_{i2}$ einen Abstand $v_K$ zu der Ebene $E_{(i-1)1}$ des benachbarten Fingerkranzes aufweist, der gleich dem Versatzmaß $v_F$ ist.

Wie Fig. 7 zeigt, sind die einzelnen Fingerkränze in Längs richtung der Trägerhülse 12 zueinander ausgerichtet, d.h. sie weisen in Umfangsrichtung der Trägerhülse 12 keinen Winkelversatz auf. Dies führt dazu, dass die Spitzen gleich artiger Finger der einzelnen Fingerkränze auf geraden, parallel zur Längsachse der Trägerhülse 12 verlaufenden Verbindungslinien liegen, von denen in Fig. 7 beispielhaft die drei Linien $x_1$, $x_2$ und $x_3$ dargestellt sind.

Fig. 5 zeigt die geometrischen Verhältnisse im Mittelbe reich des Applikators 10. Der Kern 11 weist in seinem Abschnitt konstanten kreisförmigen Querschnitts einen Außen durchmesserd auf und ist von der Trägerhülse 12 mit einer Wanddicke a umgeben. Die Trägerhülse 12 trägt außenseitig die nach außen auskragenden, kegelförmigen, d. h. sich zum freien Ende konisch verjüngenden Finger 13, die eine radiale Länge I besitzen. Der Gesamtdurchmesserd einer Hüll fläche des Applikators ergibt sich somit zu:

$$D = d + 2a + 2l.$$

Die zugeordneten Finger 13b enachbarter Fingerkränze besitzen an ihren freien Enden einen gegenseitigen Abstand $s_1$, während zwischen den Fingerfüßen zugeordneter Finger benachbarter Fingerkränze ein lichter Abstand $s_2$ besteht, wie in Fig. 5 dargestellt ist. Die Finger 13 besitzen die Form eines Kreiskegels, wobei die Grund - oder Anschlussfläche des Fingers einen Durchmesser $d_F$ (siehe Fig. 6) aufweist. Die Finger sind anihrem äußeren freien Ende mit einem Radius R a b-gerundet.

Für die einzelnen Parameter haben sich folgende Bereiche als sinnvoll erwiesen:

    1. Gesamtdurchmesser D des Applikators: 6,0 mm bis 10,0 mm.

2. Krümmungsradius $r_K$ des Kerns: 12 mm bis 50 mm

3. Kerndurchmesser d: 1,5 mm bis 2,5 mm.

4. Wandstärke a Trägerhülse: 0,3 mm bis 1,0 mm.

5. Fingerlänge I: 1,5 mm bis 3,0 mm.

6. Abstand $s_1$ der Fingerspitzen benachbarter Fingerkränze: 0,6 mm bis 1,5 mm.

7. Abstand $s_2$ der Fingerfüße benachbarter Fingerkränze: 0,2 mm bis 0,5 mm.

8. Gesamtlänge L der Trägerhülse: 20,0 mm bis 35,0 mm.

9. Länge v des vorderen, nicht ausgesteiften Bereichs: 1,0 mm bis 8,0 mm.

10. Anzahl n der Finger pro Fingerkranz: 8 bis 16, insbesondere 8, 10, 12 oder 16.

11. Anzahl N der Fingerkränze: 14 bis 30.

12. Durchmesser $d_F$ des Fingerfußes: 0,4 mm bis 1,0 mm.

13. Rundungsradius R der Fingerspitze: 0,02 mm bis 0,2 mm.

14. Axialer Versatz $v_F$ der Finger eines Fingerkranzes: $v_F = f \times d_F$, wobei $0 \leq f \leq 1,5$.

15. Versatzwinkel $\alpha$ benachbarter Fingerkränze in Umfangs richtung: $0° \leq \alpha \leq 10°$.

**Patentansprüche**

1. Applikator für flüssige oder pastöse Medien, insbesondere für dekorative Kosmetika wie Ma s-cara, mit einem sichelförmigen, aussteifenden Kern (11) aus einem ersten Kuns tstoff-Material, der zumindest im Bereich seines vorderen Endes von einer Trägerhülse (12) aus einem zwe i-ten Kunststoff-Material umgeben ist, die eine Vielzahl von radial nach außen auskragenden Fingern (13) aufweist, die einstückig an die Trägerhülse (12) angeformt sind und aus dem zweiten Kunststoff-Material bestehen, wo bei mehrere über den Umfang der Trägerhülse (12) verteilte Finger (13) einen Fingerkranz ($K_1$, $K_2$, $K_3$...) bilden und wobei in Längsrichtung der Trägerhülse (12) eine Vielzahl N von Fingerkränzen ($K_1$, $K_2$, $K_3$...) mit gleicher Fingeranzahl n hintereinander ange ordnet sind, **gekennzeichnet durch** folgende Parame ter-Kombination:

I Anzahl n der Finger (13) pro Fingerkranz ($K_1$, $K_2$, $K_3$...): 8 bis 16,

II Anzahl N der in Axialrichtung der Trägerhülse hintereinander liegenden Fingerkränze ($K_1$, $K_2$, $K_3$...): $14 \leq N \leq 30$, insbesondere $20 \leq N \leq 27$

III Länge I der Finger (13): $1,5 \text{ mm} \leq I \leq 3,0 \text{ mm}$,

IV Abstand $s_1$ der freien Enden gleichartiger Finger (13) benachbarter Fingerkränze ($K_1$, $K_2$, $K_3$...): $0,6 \text{ mm} \leq s_1 \leq 1,5 \text{ mm}$ und

V Abstand $s_2$ der Füße gleichartiger Finger (13) benachbarter Fingerkränze ($K_1$, $K_2$, $K_3$...): $0,2 \text{ mm} \leq s_2 \leq 0,5 \text{ mm}$ und

VI Biegeradius (Krümmung) des K ems im bereich der Bürste von $r_K = 12$ mm bis 50 mm.

2. Applikator nach Anspruch 1, **gekennzeichnet durch** folgende Parameter-Kombination:

| I. n = 10 | IV. $s_1$ = 0,95 mm |
| II. N = 27 | V. $s_2$ = 0,25 mm. |
| III. I = 2,4 mm | VI. $r_K$ = 25 mm |

3. Applikator nach Anspruch 1, **gekennzeichnet durch** folgende Parameter-Kombination:

| I. n = 12 | IV. $s_1$ = 1,2 mm |
| II. N = 22 | V. $s_2$ = 0,42 mm. |
| III. I = 2,4 mm | VI. $r_K$ = 15 mm |

4. Applikator nach einem der Ansprüche 1 bis 3, **dadurch gekennzeichnet, dass** die Finger sen k-recht zur Bürstenachse A-A (Fig.1) stehen.

5. Applikator nach einem der Ansprüche 1 bis 3, **dadurch gekennzeichnet, dass** die Finger (13) des Fingerkranzes ($K_1$, $K_2$, $K_3$...) über den Umfang der Trägerhülse (12) gleich ve rteilt sind.

6. Applikator nach einem der Ansprüche 1 bis 4, **dadurch gekennzeichnet, dass** der Applikator einen Außendurchmesser D im Bereich von 6,0 mm bis 10,0 mm aufweist.

7. Applikator nach Anspruch 5, **dadurch gekennzeichnet, dass** der Außendurchmesser D des Applikators 8,0 mm beträgt.

8. Applikator nach einem der Ansprüche 1 bis 6, **dadurch gekennzeichnet, dass** der Außendurchmesserd des Kerns (11) im Bereich von 1,5 mm bis 2,5 mm liegt.

9. Applikator nach Anspruch 7, **dadurch gekennzeichnet, dass** der Außendurchmesser d des Kerns (11) 2,0 mm beträgt.

10. Applikator nach einem der Ansprüche 1 bis 8, **dadurch gekennzeichnet, dass** der Kern (11) sich an seinem vorderen Endeverjüngt.

11. Applikator nach einem der Ansprüche 1 bis 9, **dadurch gekennzeichnet, dass** die Trägerhülse (12) eine radiale Wandstärke a im Bereich von 0,3 mm bis 1,0 mm aufweist.

12. Applikator nach Anspruch 10, **dadurch gekennzeichnet, dass** die radiale Wandstärke a der Trägerhülse (12) 0,6 mm beträgt.

13. Applikator nach einem der Ansprüche 1 bis 11, **dadurch gekennzeichnet, dass** die Trägerhülse (12) zusammen mit den Fingern (13) aus einem elastomeren Kunststoffbesteht.

14. Applikator nach einem der Ansprüche 1 bis 12, **dadurch gekennzeichnet, dass** die Trägerhülse (12) eine axiale Länge L im Bereich von 20,0 mm bis 35,0 mm besitzt.

15. Applikator nach Anspruch 13, **dadurch gekennzeichnet, dass** die axiale Länge L der Träge r-hülse (12) 25,0 mm be trägt.

16. Applikator nach einem der Ansprüche 1 bis 14, **dadurch gekennzeichnet, dass** die Trägerhülse (13) in ihrem vorderen Endabschnitt (12b) um das Maß v über das vordere Ende (11d) des Kerns (11) hinausragt, wobei v im Be reich von 1,0 mm bis 8,0 mm liegt.

17. Applikator nach Anspruch 15, **dadurch gekennzeichnet, dass** das Maß v 3,0 mm beträgt.

18. Applikator nach einem der Ansprüche 1 bis 16, **dadurch gekennzeichnet, dass** zumindest ein Finger eines Fingerkranzes gegenüber den anderen Fingern des Fingerkran zes um das Maß $v_F$ in Längsrichtung der Trägerhülse (12) versetztangeordnet ist.

19. Applikator nach Anspruch 17, **dadurch gekennzeichnet, dass** jeder zweite Finger des Finge r-kranzes versetzt an geordnet ist.

20. Applikator nach Anspruch 17 oder 18, **dadurch gekennzeichnet**, **dadurch gekennzeichnet, dass** für das Maß $v_F$ gilt:

$$v_F = f \times d_F,$$

wobei $d_F$ der Fußdurchmesser des Fingers (13) ist und f ein Faktor im Bereich von 0 bis 1,5 ist.

21. Applikator nach einem der Ansprüche 1 bis 19, **dadurch gekennzeichnet, dass** benachbarte Fingerkränze ($K_1$, $K_2$, $K_3$...) in Umfangsrichtung um einen Winkel $\alpha$ versetzt zueinander ange-ordnet sind, wobei gilt: $0° \leq \alpha \leq 10°$.

22. Applikator nach einem der Ansprüche 1 bis 20, **dadurch gekennzeichnet, dass** der Fußdurchmesser $d_F$ des Fingers (13) im Bereich von 0,4 mm bis 1,0 mm liegt.

23. Applikator nach Anspruch 2 1, **dadurch gekennzeichnet, dass** der Fußdurchmesser $d_F$ des Fingers (13) 0,68 mm beträgt.

24. Applikator nach einem der Ansprüche 1 bis 22, **dadurch gekennzeichnet, dass** die Finger (13) kegel- oder pyramidenförmig ausgebildet und an ihrem freien Ende abgerundet sind.

25. Applikator nach Anspruch 23, **dadurch gekennzeichnet, dass** ein Radius R der Abrundung im Bereich von 0,02 mm und 0,2 mm liegt.

26. Applikator nach Anspruch 24, **dadurch gekennzeichnet, dass** der Radius R der Abru ndung 0,05 mm beträgt.

Fig. 1

Fig. 3

10

Fig. 2

Fig. 4

Fig. 5

Fig. 6

Fig. 7

11

11b

11d

R

Fig. 8

Mb

Ma